# EUROPÄISCHE PATENTSCHRIFT

(11) **EP 1 995 151 B1**
(45) Veröffentlichungstag und Bekanntmachung des Hinweises auf die Patenterteilung: **11.01.2012**
(21) Anmeldenummer: 08103346.6
(22) Anmeldetag: 03.04.2008
(51) Int. Cl.: B62D 5/04, F16C 25/08

(54) **Lageranordnung**
Storage assembly
Agencement de stockage

(30) Priorität: 25.05.2007 DE 102007024405
(43) Veröffentlichungstag der Anmeldung: 26.11.2008
(73) Patentinhaber: ROBERT BOSCH GMBH, 70442 Stuttgart (DE)
(72) Erfinder: Maly, Robert, 31139, Hildesheim (DE); Zernikow, Maik, 31139, Hildesheim (DE)

(56) Entgegenhaltungen:
- EP-A- 1 152 165
- DE-A1- 10 315 603
- US-A- 4 640 500
- US-A- 4 699 528
- US-A- 5 829 891

## Beschreibung

### Technisches Gebiet

Die Erfindung betrifft eine Lageranordnung, insbesondere zur Verwendung in einem Kraftfahrzeug z.B. für einen Lenkmotor.

### Stand der Technik

In modernen Kraftfahrzeugen wird eine Lenksystem eines Kraftfahrzeugs beispielsweise mit einem Elektromotor durch ein Getriebe gekoppelt. Der Elektromotor ist in einem Gehäuse angeordnet, in dem beispielsweise ein Festlager und ein Loslager zum Halten des Rotors des Elektromotors vorgesehen sind. Ein Loslagersitz eines solchen Loslagers wird üblicherweise durch Federelemente angestellt, d.h. in axialer Richtung vorgespannt z.B. indem ein Federelement zwischen einer Kante auf der Rotorwelle und einem verschieblichen Innenring des Loslagers (Loslagersitz) vorgespannt eingebracht wird. Eine solche Vorspannung dient dazu, eine Geräuschentwicklung der Lagerung bei Schwingungen, Stößen und axialen Bewegungen der Welle zu verringern. Schwingbeschleunigungen der unterschiedlichen Massen von Rotor und Loslagerinnenring führen zu geringen Relativbewegungen zwischen der Rotorwelle und dem Loslagerinnenring. Diese Relativbewegungen weisen zwar geringe Amplituden auf können durch hohe Häufigkeit jedoch trotzdem zu einem Verschleiß der Lagersitzes (Welle) führen.

Mit der US-A-5829891 ist eine Anordnung zur Lagerung einer Welle in einem Gehäuse bekannt geworden, bei dem die Welle mittels zweier Kugellager gelagert ist. Zwischen dem Innenring eines Kugellagers und einem Bund der Welle ist eine Spiralfeder angeordnet, die das Längsspiel zwischen dem Innenring und dem Bund der Welle ausgleicht. Zusätzlich ist zwischen dem Innenring und der Spiralfeder ein elastisches Element, beispielsweise ein Elastomer angeordnet.

Die US-A-4699528 zeigt ein Gehäuses mit einer zylindrischen Innenfläche, innerhalb der eine Welle mittels Kugellager gelagert ist. Das Kugellager weist einen Lagerinnenring und einen Lageraußenring auf, die jeweils in alternativen Ausführungen mittels einer Spiralfeder gegen einen Anschlag der Welle vorgespannt sind. Alternativ zur Spiralfeder können andere axiale Kompensationsmittel angeordnet werden, um eine optimale Seibstjustierung der Kugellager zu gewährleisten.

### Offenbarung der Erfindung

Es ist Aufgabe der vorliegenden Erfindung, die Relativbewegungen zwischen dem Loslagersitz und der Rotorwelle zu reduzieren.

Diese Aufgabe wird durch die Lageranordnung nach Anspruch 1 gelöst.

Weitere vorteilhafte Ausgestaltungen der Erfindung sind in den abhängigen Ansprüchen angegeben.

Gemäß einem Aspekt ist eine Lageranordnung, insbesondere für ein Lenksystem, vorgesehen. Die Lageranordnung umfasst eine Rotorwelle, ein Lager mit Lagerringen, zwischen denen ein oder mehrere Wälzkörper angeordnet sind, wobei der verschieblich gelagerte Lagerring in axialer Richtung der Rotorwelle, insbesondere in Form einer Spielpassung, verschieblich gelagert ist, sowie ein Federelement, mit dem der verschiebliche Lagerring vorgespannt ist. Das Federelement und das Lager sind miteinander gekoppelt, um eine Dämpfung einer Relativbewegung des verschieblichen Lagerringes des Lagers zu bewirken.

Eine Idee der Erfindung besteht darin, das Federelement mit einer Dämpfung zu versehen, um die Relativbewegungen des Loslagersitzes, aufgrund von Kräften, die auf die Rotorwelle und dem Gehäuse wirken, weiter zu reduzieren. Dazu kann eine Dämpfungsvorrichtung vorgesehen werden, die die Beschleunigungskräfte aller möglichen Relativbewegungen des Loslagersitzes dämpft und dadurch die Relativbewegungen verhindert oder reduziert.

Gemäß der Erfindung ist das Federelement als Spiralfeder mit mehreren Windungen um die Rotorwelle ausgebildet, wobei ein Teil der Windungen in einem ersten Bereich der Rotorwelle, der sich unmittelbar an den Lagerring anschließt, in einem Presssitz auf der Rotorwelle angeordnet sind und ein weiterer Teil der Windungen in einem zweiten Bereich um die Rotorwelle in axialer Richtung frei beweglich vorgesehen sind.

Vorzugsweise kann die Lageranordnung mit einer Dämpfungsvorrichtung versehen sein, die außerhalb des Lagers an dem Federelement angebracht ist, um eine Bewegung des verschieblich gelagerten Lagerrings mit einer Dämpfung zu beaufschlagen.

Weiterhin kann als der verschieblich gelagerte Lagerring ein Innenring des Lagers vorgesehen ist.

Insbesondere kann das Federelement eine Druckfeder umfassen, die zwischen einer in Umfangsrichtung umlaufenden Stufe und einer Seitenfläche des Lagerrings vorgespannt angeordnet ist.

Gemäß einer Ausführungsform kann die Dämpfungsvorrichtung mit einer Ummantelung mindestens einer Windung des mit der Druckfeder ausgebildeten Federelementes, insbesondere mit einem Kunststoffmaterial oder Gummimaterial, ausgebildet sein.

Gemäß einer weiteren Ausführungsform kann die Dämpfungsvorrichtung mit einem Dämpfungsring, insbesondere einem Kunststoffring, ausgebildet sein, der in einem Presssitz gehalten ist und der zwischen dem Federelement und einer Seitenfläche des entsprechenden Lagerrings angeordnet ist.

Gemäß einer weiteren Ausführungsform kann die Dämpfungsvorrichtung mit einer Dämpfungshülse, insbesondere einer Kunststoffhülse, ausgebildet sein, die im Bereich des Federelementes in einem Presssitz auf der Rotorwelle angeordnet ist, wobei das Federelement mit einer Kraft an der Dämpfungshülse anliegt, um bei einer Relativbewegung zumindest eines Teils des Federelementes eine Dämpfung zu bewirken.

Insbesondere können die Windungen der Spiralfeder einen gleichen Durchmesser aufweisen und die Rotorwelle in dem zweiten Bereich einen kleineren Durchmesser aufweisen als in dem ersten Bereich. Alternativ oder zusätzlich können die Windungen der Spiralfeder in dem zweiten Bereich einen größeren Durchmesser aufweisen als die Windungen in dem ersten Bereich.

Gemäß einem weiteren Aspekt ist ein Lenksystem mit einem Elektromotor, der mit einer Lenkwelle gekoppelt ist, mit einer obigen Lageranordnung vorgesehen.

### Kurzbeschreibung der Zeichnungen

Bevorzugte Ausführungsformen der Erfindung werden nachfolgend anhand der beigefügten Fig 1, Fig. 2 Fig.6, Fig.7 näher erläutert. Es zeigen:

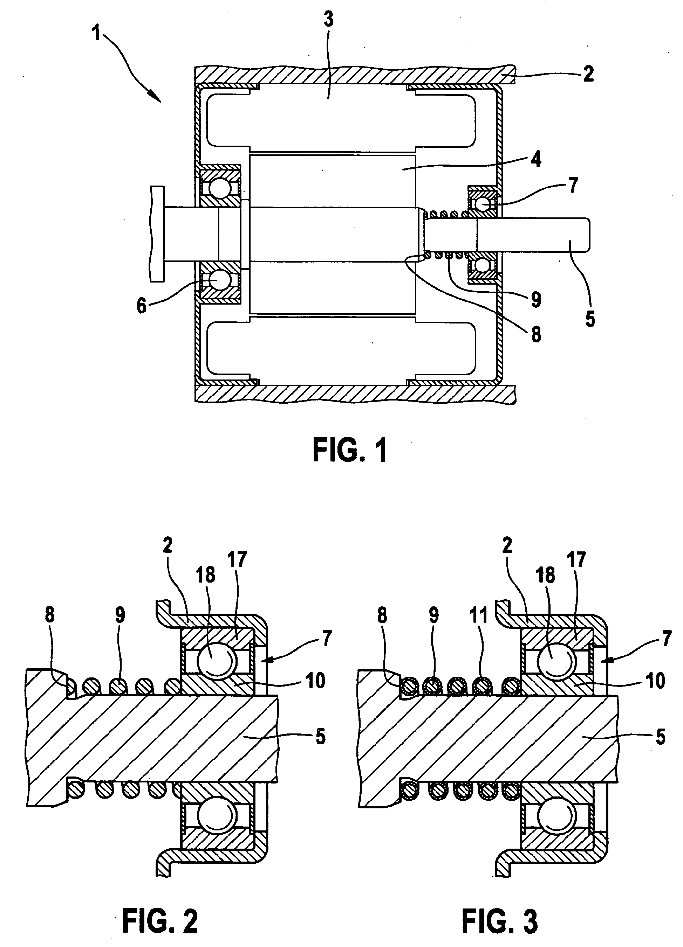

- Fig.1: eine Querschnittsansicht durch einen Elektromotor;
- Fig. 2: eine detailliertere Darstellung eines Loslagersitzes in dem Gehäuse der Fig. 1;
- Fig. 3: eine Querschnittsdarstellung einer Loslageranordnung zur Erländerung der Erfindung;

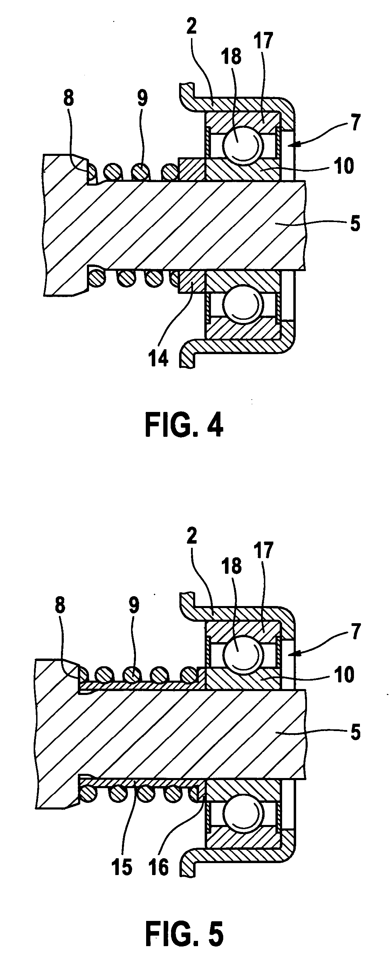

- Fig. 4: einen Querschnitt durch eine weitere Lageranordnung zur Erlänterung der Erfindung;
- Fig. 5: einen Querschnitt durch eine weitere Lageranordnung zur Erläuterung der Erfindung; und

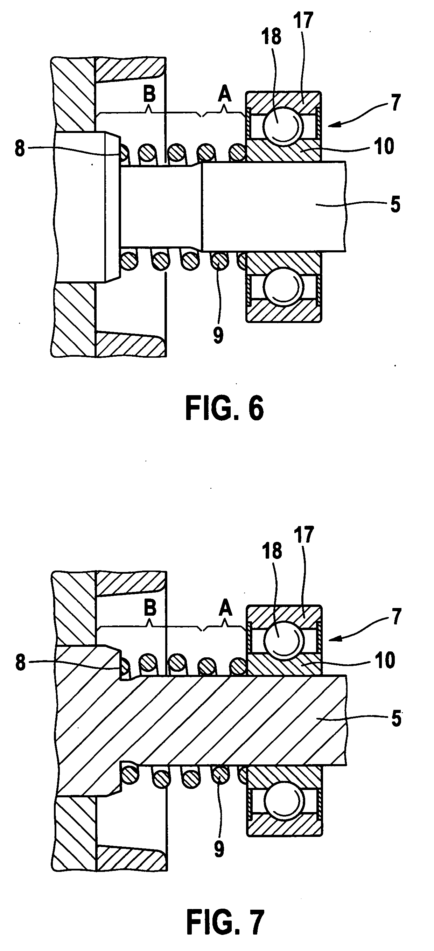

- Fig. 6: einen Querschnitt durch eine Lageranordnung gemäß einer Ausführungsform der Erfindung; und
- Fig. 7: einen Querschnitt durch eine Lageranordnung gemäß einer weiteren Ausführungsform der Erfindung.

### Beschreibung der Ausführungsformen

In den Figuren entsprechen gleiche Bezugszeichen Elementen gleicher oder vergleichbarer Funktion

In Fig. 1 ist ein Querschnitt durch einen Elektromotor 1 dargestellt, der in einem Gehäuse 2 angeordnet ist. In dem Gehäuse 2 ist ein Stator 3 des Elektromotors 1 angeordnet. Der Stator 3 umgibt eine Rotoranordnung 4, die auf einer Rotorwelle 5 aufgebracht ist. Die Rotorwelle 5 ist im Gehäuse 2 mit einem Festlager 6 und mit einem Loslager 7 gelagert. Die Verwendung eines Loslagers 7 ist notwendig, um Schwingungen, Stöße und Ausdehnungen der Rotorwelle 5, z.B. aufgrund von Temperaturänderungen, aufnehmen zu können, so dass Spannungen in der Rotorwelle 5, den Lagern 6, 7, dem Gehäuse 2 und / oder dem Stator 3 vermieden werden können. Das Loslager 7 weist einen Innenring 10 und einen Außenring 17 auf, zwischen denen Wälzkörper 18, wie z.B. Kugeln, angeordnet sind. Der Außenring 17 ist fest mit dem Gehäuse 2 verbunden. Der Innenring 10 ist mit einem Schiebesitz (Spielpassung) auf der Rotorwelle 5 (mit vernachlässigbarer Reibungskraft verschiebbar) angeordnet, so dass Relativbewegungen zwischen Rotorwelle 5 und Innenring 10 aufgenommen werden können.

Die Rotorwelle 5 weist eine Stufe 8 in radialer Richtung auf, so dass eine Anlagefläche für eine beispielsweise als eine um die Rotorwelle 5 angeordnete Spiralfeder ausgebildete Druckfeder 9 gebildet wird, die wie detaillierter in Fig. 2 gezeigt ist, zwischen der Stufe 8 und einer der Stufe zugewandten Seitenfläche des Innenring 10 des Loslagers 7 angeordnet ist. Dadurch wird der Innenring 10 des Loslagers mit einer Kraft beaufschlagt, um eine bessere Führung der Kugeln in dem Loslager 7 zu gewährleisten. Anstelle des Innenrings 10 kann auch der Außenring 17 mit einem Schiebesitz im Gehäuse 2 angeordnet werden, wobei ein Federelement den Außenring 17 im Gehäuse 2 vorspannt.

Die Relativbewegungen zwischen Rotorwelle 5 und Innenring 10 können, obwohl sie sehr gering sind, während der Lebensdauer zu einem nicht vernachlässigbaren Verschleiß führen. Daher sollen diese Relativbewegungen möglichst reduziert werden.

In Fig. 3 ist Querschnitt einer Lageranordnung zur Erläuterung der Erfindung dargestellt.

Dabei ist eine Dämpfungsvorrichtung vorgesehen, die die Relativbewegungen des Innenrings 10 dämpft. Aus Gründen einer einfachen Montage ist die Dämpfungsvorrichtung außerhalb des Loslagers 7 angeordnet und mit der Druckfeder 9 gekoppelt, um es gemeinsam mit der Druckfeder 9 zu montieren. In der Ausführungsform der Fig. 3 ist dazu die Druckfeder 9 mit einer Dämpfungsummantelung 11 versehen, die ein Material aufweist, das eine Reibkraft zwischen den Windungen der Druckfeder 9 und der Oberfläche des Abschnittes der Rotorwelle 5, an dem die Druckfeder 9 anliegt, bewirkt. Z.B. können dazu die einzelnen Windungen Druckfeder 9 kunststoffummantelt ausgeführt sein und mit einem leichten Press-Sitz auf der Rotorwelle 5 angeordnet sein. Zusätzlich zur Federkraft, die die vorgespannte Druckfeder 9 auf den Innenring 10 ausübt, wirkt somit auch eine Dämpfung, die jeder Relativbewegung zwischen dem Innenring 10 und der Rotorwelle 5 entgegenwirkt.

Eine weitere Lageranordnung zur Erläuterung der Erfindung ist in Fig. 4 als Querschnitt dargestellt. Dabei ist zwischen dem Innenring 10 und dem Federelement ein Dämpfungsring 14 angeordnet, der als Kunststoffring ausgebildet ist. Der Dämpfungsring 14 ist mit einem definierten Presssitz auf der Rotorwelle 5 angeordnet. Der Presssitz des Dämpfungsringes 14 bewirkt eine Dämpfungskraft, die aufgewendet werden muss, um den Dämpfungsring 14 entlang der Rotorwelle 5 zu verschieben. Die Druckfeder 9 liegt dabei an der Stufe 8 der Rotorwelle 5 und an einer der Stufe 8 zugewandten Seite des Dämpfungsringes 14 an. Die andere Seite des Dämpfungsrings 14 liegt an der Seitenfläche des Innenrings 10 des Loslagers 7 an. Dabei wird auch eine Dämpfung in radialer Richtung bewirkt. Das Material des Dämpfungsrings 14 ist nahezu beliebig, sofern es ermöglicht, eine bestimmte Dämpfungskraft durch einen Presssitz des Dämpfungsrings 14 auf der Rotorwelle 5 zu bewirken.

In Fig. 5 ist ein Querschnitt einer weiteren Lageranordnung zur Erläuterung der Erfindung dargestellt. Dabei wird eine Dämpfungshülse 15 zwischen der Stufe 8 der Rotorwelle 5 und der Seitenfläche des Innenrings 10 des Loslagers 7 angeordnet. Die Dämpfungshülse 15 ist mit einem leichten Presssitz auf der Welle 5 angeordnet. Weiterhin kann die Druckfeder 9 ebenfalls mit einem Presssitz auf der Dämpfungshülse 15 angeordnet sein. Die Dämpfungshülse 15 bewirkt eine Reibung zwischen der Druckfeder 9 und der Rotorwelle 5, wodurch eine Dämpfungskraft bezüglich der Relativbewegung zwischen dem Innenring 10 und der Rotorwelle 5 erzeugt wird. Die Dämpfungswirkung kann nun durch die Reibung zwischen der Rotorwelle 5 und der Dämpfungshülse 15 und/oder zwischen der Druckfeder 9 und der Dämpfungshülse 15 hervorgerufen werden.

Vorzugsweise kann die Dämpfungshülse 15 zusätzlich eine Anschlagskante 16 aufweisen, an der ein der Stufe 8 der Rotorwelle 5 gegenüberliegendes Ende der Druckfeder 9 anliegt und so die Dämpfungshülse 15 gegen die Seitenfläche des Innenrings 10 drückt. Da eine Verschiebung der Dämpfungshülse 15 auf der Rotorwelle 5 aufgrund der durch den Presssitz hervorgerufenen Reibungskraft eine Kraft benötigt, kann dadurch eine Dämpfungskraft für Relativbewegungen in axialer Richtung der Rotorwelle 5 erzeugt werden.

Gemäß einer weiteren Ausführungsform der Erfindung, die in Fig. 6 gezeigt ist, weist die Rotorwelle 5 in dem Abschnitt, der von der Spiralfeder 9 umgeben ist, einen ersten Bereich A auf, der einen Durchmesser aufweist, der dem Innendurchmesser der Spiralfeder so entspricht, dass die Windungen der Spiralfeder dort mit einem Presssitz auf der Umfangsfläche der Rotorwelle 5 anliegen. Der erste Bereich A schließt sich unmittelbar an den Innenring 10 des Loslagers 7 an. Dadurch müssen bei einer Relativbewegung zwischen der Rotorwelle 5 und dem Innenring 10 die entsprechenden Windungen in dem ersten Bereich A zunächst eine Reibungskraft bzw. Haftreibungskraft überwinden, wodurch eine Dämpfung einer Relativbewegung zwischen dem Innenring 10 des Loslagers 7 und der Rotorwelle 5 bewirkt wird. In einem zweiten Bereich B ist der Durchmesser der Rotorwelle 5 gegenüber dem des ersten Bereichs A verringert, so dass die entsprechenden Windungen der Spiralfeder dort mit einem Spielsitz vorgesehen sind. Die Windungen der Spiralfeder 9 in dem Bereich B tragen daher nicht zur Dämpfung bei. Durch die Wahl der Größe des ersten Bereichs A kann die Höhe der Dämpfung angepasst werden. Vorzugsweise betrifft der erste Bereich A nur die ersten ein bis drei Windungen der Spiralfeder 9.

Gemäß einer in Figur 7 gezeigten Ausführungsform ist die Rotorwelle 5 in dem Abschnitt, der von der Spiralfeder 9 umgeben ist, mit einem gleich bleibenden Durchmesser vorgesehen. Die Spiralfeder 9 weist jedoch Windungen an dem dem Innenring 10 zugeordneten Ende in einem ersten Bereich A Windungen auf, die in einem Presssitz auf der Rotorwelle 5 angeordnet sind, d.h. dass der Durchmesser der entsprechenden Windungen dort reduziert ist. In einem Bereich B ist der Innendurchmesser der Windungen der Spiralfeder 9 vergrößert, so dass zwischen der Rotorwelle 5 und den entsprechenden Windungen im zweiten Bereich B ein Spiel besteht. Die Dämpfung wird wie bei der Ausführungsform der Fig. 6 durch die Reibungskraft bzw. Haftreibungskraft zwischen der Rotorwelle 5 und den Windungen der Spiralfeder 9 im ersten Bereich A bewirkt.

Es ist selbstverständlich, dass bei allen Ausführungsformen die Dämpfung so eingestellt wird, dass die Dämpfungskraft geringer ist als die Federkraft.

## Patentansprüche

1. Lageranordnung, insbesondere für ein Lenksystem, umfassend:
- eine Rotorwelle (5);
- ein Lager (7) mit Lagerringen (10,17), zwischen denen ein oder mehrere Wälzkörper (18) angeordnet sind, wobei mindestens einer der Lagerringe (10, 17) in axialer Richtung der Rotorwelle verschieblich, insbesondere in Form einer Spielpassung, gelagert ist;
- ein Federelement (9), mit dem der verschieblich gelagerte Lagerring (10, 17) vorgespannt ist; wobei
das Federelement (9) und das Lager (7) mit einander gekoppelt sind, um eine Dämpfung einer Relativbewegung des verschieblichen Lagerringes des Lagers (7) zu bewirken. **dadurch gekennzeichnet, dass** das Federelement (9) als Spiralfeder mit mehreren Windungen um die Rotorwelle (5) ausgebildet ist, wobei ein Teil der Windungen in einem ersten Bereich der Rotorwelle (5), der sich unmittelbar an den Lagerring anschließt, in einem Presssitz auf der Rotorwelle (5) angeordnet sind und ein weiterer Teil der Windungen in einem zweiten Bereich um die Rotorwelle (5) in axialer Richtung frei beweglich vorgesehen sind.

2. Lageranordnung nach Anspruch 1, weiterhin umfassend:- eine Dämpfungsvorrichtung (11, 14, 15), die außerhalb des Lagers an dem Federelement (9) angebracht ist, um eine Bewegung des verschieblich gelagerten Lagerringes mit einer Dämpfung zu beaufschlagen.

3. Lageranordnung nach Anspruch 2, wobei als der verschieblich gelagerte Lagerring ein Innenring (10) des Lagers vorgesehen ist.

4. Lageranordnung nach Anspruch 2 oder 3, wobei das Federelement (9) eine Druckfeder umfasst, die zwischen einer in Umfangsrichtung umlaufenden Stufe (8) und einer Seitenfläche des Lagerrings (10, 17) vorgespannt angeordnet ist.

5. Lageranordnung nach Anspruch 1, wobei der erste Bereich (A) nur die ersten ein bis drei Windungen der Spiralfeder (9) umfasst.

6. Lageranordnung nach Anspruch 5, wobei die Windungen der Spiralfeder einen gleichen Durchmesser aufweisen und wobei die Rotorwelle (5) in dem zweiten Bereich einen kleineren Durchmesser aufweist als in dem ersten Bereich.

7. Lageranordnung nach Anspruch 5, wobei die Windungen der Spiralfeder in dem zweiten Bereich einen größeren Durchmesser aufweisen als die Windungen in dem ersten Bereich.

8. Lenksystem mit einem Elektromotor (1), der mit einer Lenkwelle gekoppelt ist, mit einer Lageranordnung nach einem der Ansprüche 1 bis 7.

## Claims

1. Bearing arrangement, in particular for a steering system, comprising:
- a rotor shaft (5);
- a bearing (7) with bearing rings (10, 17), between which one or more roller bodies (18) are arranged, wherein at least one of the bearing rings (10, 17) is mounted so as to be displaceable in the axial direction of the rotor shaft, in particular in the form of a play adaptation means;
- a spring element (9) with which the displaceably mounted bearing ring (10, 17) is prestressed; wherein
the spring element (9) and the bearing (7) are coupled to one another in order to bring about damping of a relative movement of the displaceable bearing ring of the bearing (7), **characterized in that** the spring element (9) is embodied as a helical spring with a plurality of turns around the rotor shaft (5), wherein a portion of the turns is arranged in a form fit on the rotor shaft (5), in a first region of the rotor shaft (5) which directly adjoins the bearing ring, and a further portion of the turns is provided in a second region around the rotor shaft (5) so as to be freely movable in the axial direction.

2. Bearing arrangement according to Claim 1, further comprising: - a damping device (11, 14, 15) which is mounted on the spring element (9) outside the bearing, in order to apply damping to a movement of the displaceably mounted bearing ring.

3. Bearing arrangement according to Claim 2, wherein an inner ring (10) of the bearing is provided as the displaceably mounted bearing ring.

4. Bearing arrangement according to Claim 2 or 3, wherein the spring element (9) comprises a compression spring which is arranged prestressed between a step (8) which runs around in the circumferential direction and a lateral face of the bearing ring (10, 17).

5. Bearing arrangement according to Claim 1, wherein the first region (A) comprises only the first one to three turns of the helical spring (9).

6. Bearing arrangement according to Claim 5, wherein the turns of the helical spring have the same diameter, and wherein the rotor shaft (5) has a smaller diameter in the second region than in the first region.

7. Bearing arrangement according to Claim 5, wherein the turns of the helical spring have a larger diameter in the second region than the turns in the first region.

8. Steering system having an electric motor (1) which is coupled to a steering shaft, having a bearing arrangement according to one of Claims 1 to 7.

## Revendications

1. Agencement de roulement, en particulier pour un système de direction, comportant :
- un arbre de rotor (5) ;
- un roulement (7) comprenant des bagues de roulement (10, 17) entre lesquelles un ou plusieurs corps de roulement (18) sont disposés, au moins une des bagues de roulement (10, 17) étant montée de manière déplaçable dans la direction axiale de l'arbre de rotor, en particulier sous la forme d'un ajustement avec jeu ;
- un élément ressort (9), à l'aide duquel la bague de roulement (10, 17) montée de manière déplaçable est précontrainte ;
l'élément ressort (9) et le roulement (7) étant accouplés l'un à l'autre, afin de provoquer un amortissement d'un mouvement relatif de la bague de roulement déplaçable du roulement (7), **caractérisé en ce que** l'élément ressort (9) est réalisé en tant que ressort spiral avec plusieurs spires autour de l'arbre de rotor (5), une partie des spires étant disposées avec un ajustement serré sur l'arbre de rotor (5) dans une première région de l'arbre de rotor (5) qui est directement adjacente à la bague de roulement, et une autre partie des spires étant situées de manière librement mobile dans la direction axiale dans une deuxième région autour de l'arbre de rotor (5).

2. Agencement de roulement selon la revendication 1, comportant en outre : un dispositif d'amortissement (11, 14, 15) qui est monté sur l'élément ressort (9) à l'extérieur du roulement, afin de soumettre à un amortissement un mouvement de la bague de roulement montée de manière déplaçable.

3. Agencement de roulement selon la revendication 2, dans lequel une bague intérieure (10) du roulement est prévue en tant que bague de roulement montée de manière déplaçable.

4. Agencement de roulement selon la revendication 2 ou 3, dans lequel l'élément ressort (9) comporte un ressort de compression qui est disposé de manière précontrainte entre un gradin (8) s'étendant tout autour dans la direction périphérique et une surface latérale de la bague de roulement (10, 17).

5. Agencement de roulement selon la revendication 1, dans lequel la première région (A) ne comporte que les trois premières spires du ressort spiral (9).

6. Agencement de roulement selon la revendication 5, dans lequel les spires du ressort spiral présentent le même diamètre, et dans lequel l'arbre de rotor (5) présente dans la deuxième région un diamètre plus petit que son diamètre dans la première région.

7. Agencement de roulement selon la revendication 5, dans lequel les spires du ressort spiral présentent dans la deuxième région un diamètre plus grand que celui des spires dans la première région.

8. Système de direction comprenant un moteur électrique (1) qui est accouplé à un arbre de direction, et un agencement de roulement selon l'une quelconque des revendications 1 à 7.
